# EUROPEAN PATENT APPLICATION

(11) **EP 4 626 024 A1**
(43) Date of publication of application: **01.10.2025**
(21) Application number: 24190329.3
(22) Date of filing: 23.07.2024
(51) Int. Cl.: H04R 1/28, G03G 15/00, H04R 1/02

(54) **DEVICE, INPUT DEVICE, AND IMAGE FORMING APPARATUS**

(30) Priority: 25.03.2024 JP 2024048744
(71) Applicant: FUJIFILM Business Innovation Corp., Minato-ku Tokyo (JP)
(72) Inventor: SASAZAWA, Tetsuya, Yokohama-shi, Kanagawa (JP); KOIDE, Naoya, Yokohama-shi, Kanagawa (JP)
(74) Representative: Kurig, Thomas

(57) **Abstract**

A device includes a housing that includes a first cover and a second cover in which an opening portion to which the first cover is attachably and detachably attached is formed, a speaker body that is held on a second cover side inside the housing, and a compartmentalization structure that separates a first space on a front surface side of the speaker body and a second space on a rear surface side of the speaker body from each other in a state where the first cover is attached to the second cover.

## Description

### BACKGROUND OF THE INVENTION

### (i) Field of the Invention

The present disclosure relates to a device, an input device, and an image forming apparatus.

### (ii) Description of Related Art

For example, disclosed in JP2021-087077A is an image forming apparatus in which a speaker body that includes holding members holding a speaker is fixed to, with respect to a first exterior cover that constitutes an exterior of an operation device, a support portion at a position where the speaker body is exposed in a case where a second exterior cover is detached with respect to the first exterior cover.

### SUMMARY OF THE INVENTION

An object of the present disclosure is to make it easy to hear a low-pitched sound in comparison with a configuration in which a space on a front surface side of a speaker body and a space on a rear surface side of the speaker body are connected to each other in a device in which the speaker body is present between a first cover and a second cover, to and from which the first cover is attachable and detachable.

According to a first aspect of the present disclosure, there is provided a device including a housing that includes a first cover and a second cover in which an opening portion to which the first cover is attachably and detachably attached is formed, a speaker body that is held on a second cover side inside the housing, and a compartmentalization structure that separates a first space on a front surface side of the speaker body and a second space on a rear surface side of the speaker body from each other in a state where the first cover is attached to the second cover.

According to a second aspect of the present disclosure, in the device according to the first aspect, the compartmentalization structure may include a frame-shaped rib protruding from the first cover and a buffer material interposed between a protruding end of the rib and the speaker body.

According to a third aspect of the present disclosure, in the device according to the second aspect, an entire front surface side of the speaker body may be exposed in a state where the first cover is detached from the second cover.

According to a fourth aspect of the present disclosure, in the device according to any one of the first to third aspects, the housing may include an accommodation space that accommodates a functional component different from the speaker body, and the second space may include a rear-side space on the rear surface side of the speaker body, the accommodation space, and a connection space that connects the rear-side space and the accommodation space to each other.

According to a fifth aspect of the present disclosure, the device according to the fourth aspect may further include a support member that includes a surrounding portion and that supports the speaker body to the second cover side, the surrounding portion surrounding the speaker body and separating the rear-side space and the accommodation space from each other and a portion of the surrounding portion in a circumferential direction may be cut out so that the connection space is formed.

According to a sixth aspect of the present disclosure, in the device according to the fifth aspect citing the third aspect, the speaker body may be attachably and detachably attached, integrally with the support member, to the second cover side.

According to a seventh aspect of the present disclosure, there is provided an input device including an input unit that is disposed in the second space and on which an input operation is performed by a user operating the device according to any one of the first to sixth aspects.

According to an eighth aspect of the present disclosure, in the input device according to the seventh aspect, the first space may be on a side opposite to the input unit with respect to the second space.

According to a ninth aspect of the present disclosure, there is provided an image forming apparatus including the input device according to the seventh or eighth aspect as a user interface.

In the case of the device according to the first aspect, it is easy to hear a low-pitched sound in comparison with a configuration in which a space on a front surface side of a speaker body and a space on a rear surface side of the speaker body are connected to each other in a device in which the speaker body is present between a first cover and a second cover, to and from which the first cover is attachable and detachable.

In the case of the device according to the second aspect, a gap is less likely to be formed between the first space and the second space in comparison with a configuration in which the compartmentalization structure is composed of only the rib protruding from the first cover.

In the case of the device according to the third aspect, it is easy to perform an operation of assembling the speaker body in comparison with a configuration in which only a portion of the front surface side of the first cover is exposed in a state where the first cover is detached from the second cover.

In the case of the device according to the fourth aspect, it is easier to hear a low-pitched sound in comparison with a case where the second space is provided only on the rear surface side of the speaker body.

In the case of the device according to the fifth aspect, the connection space can be formed by the support member without processing the second cover.

In the case of the device according to the sixth aspect, it is possible to integrally replace the speaker body and the support member by detaching the first cover.

In the case of the input device according to the seventh aspect, the device can be provided for the input operation performed by the user.

In the case of the input device according to the eighth aspect, the size of the input device is reduced in comparison with a configuration in which the speaker body is disposed in parallel with the input unit along a cover surface.

In the case of the image forming apparatus according to the ninth aspect, a sound emission function can be achieved without the speaker body disposed in a body of the image forming apparatus.

### BRIEF DESCRIPTION OF THE DRAWINGS

Exemplary embodiment(s) of the present invention will be described in detail based on the following figures, wherein:
Fig. 1 is a view showing an image forming apparatus according to an exemplary embodiment of the present disclosure;
Fig. 2 is a perspective view showing a front surface of a user interface of the image forming apparatus according to the exemplary embodiment of the present disclosure;
Fig. 3 is a perspective view showing a rear surface of the user interface of the image forming apparatus according to the exemplary embodiment of the present disclosure;
Fig. 4 is an exploded perspective view showing the rear surface of the user interface of the image forming apparatus according to the exemplary embodiment of the present disclosure, which is subsequent to Fig. 3;
Fig. 5 is a cross-sectional view taken along line 3A-3A in Fig. 3;
Fig. 6 is an enlarged view of the vicinity of a speaker body in Fig. 5;
Fig. 7 is a perspective view related to Fig. 5; and
Fig. 8 is a diagram showing a relationship between electronic signal data and a measured value related to a case where a sound is generated by using a device including a compartmentalization structure according to the exemplary embodiment of the present disclosure.

### DETAILED DESCRIPTION OF THE INVENTION

Hereinafter, an example of an exemplary embodiment of the present disclosure will be described with reference to the drawings. The identical reference numerals are given to the identical or equivalent components and parts in each drawing. In addition, the dimensional ratios in the drawings are exaggerated for convenience of description and may differ from the actual ratios.

### [Exemplary Embodiment]

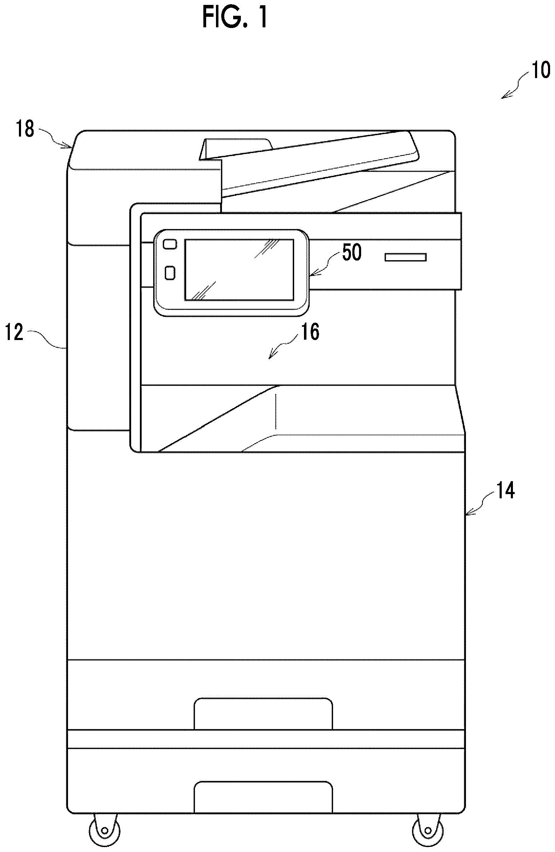

Fig. 1 shows an image forming apparatus 10 according to an exemplary embodiment of the present disclosure. As shown in Fig. 1, the image forming apparatus 10 according to the exemplary embodiment of the present disclosure includes an image forming unit 14, a document reading unit 18, an apparatus housing 12, and a user interface 50. In the following description, a side (a front side in the drawing of Fig. 1) on which a user using the image forming apparatus 10 faces the image forming apparatus 10 will be referred to as a "front side", and a side opposite thereto (a rear side in the drawing of Fig. 1) will be referred to as a "rear side".

### [Image Forming Unit 14]

The image forming unit 14 is a constituent unit having a function as a laser printer which prints an image on recording paper with a laser and is a device disposed on a lower side in the image forming apparatus 10 as shown in Fig. 1. The image forming unit 14 includes a toner image forming unit (not shown), a transfer unit that transfers a toner image formed by the toner image forming unit to the recording paper, a fixing device that fixes the transferred toner image to the recording paper, and the like. Each of components related to the image forming unit 14 is housed in the apparatus housing 12 and is controlled by a control unit (not shown) based on a printing job input through an input operation performed by a user. In addition, the recording paper on which the toner image has been fixed by the image forming unit 14 is discharged to the outside of the apparatus housing 12 from a paper discharge unit 16.

### [Document Reading Unit 18]

As shown in Fig. 1, the document reading unit 18 is a device disposed on an upper side in the image forming apparatus 10. The document reading unit 18 includes an automatic document feeder (ADF) which automatically feeds a document (recording paper on which an image has been formed), and the document reading unit 18 has a function of reading an image formed on each document and creating electronic data.

### [User Interface 50]

The user interface 50 is a device disposed at a front surface (a front side in the drawing of Fig. 1) of the image forming apparatus 10 and is a device provided to be used by a user using the image forming apparatus 10. The user interface 50 includes, for example, a touch panel 54, which is an example of an input unit in the present exemplary embodiment, and is also an example of an input device in the present exemplary embodiment.

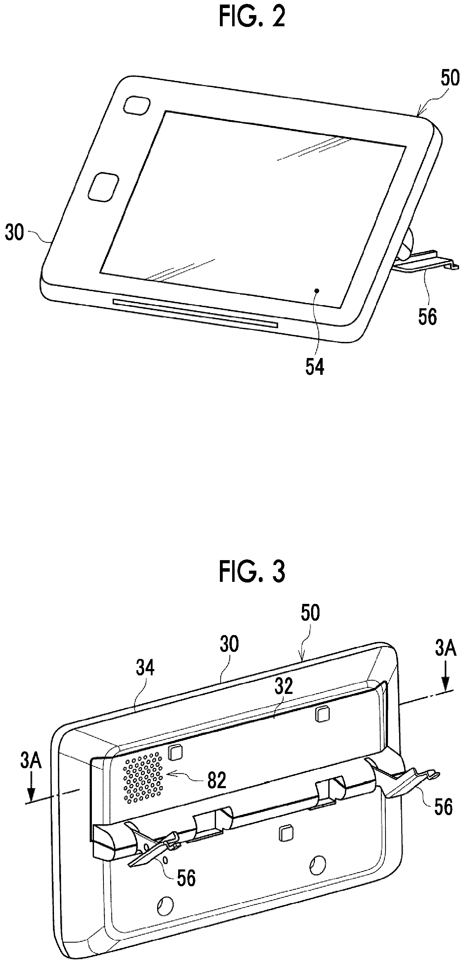

Next, the user interface 50 according to the present exemplary embodiment will be described in detail with reference to Figs. 2 to 7.

Figs. 2 and 3 are perspective views showing the outer appearance of the user interface 50 according to the exemplary embodiment of the present disclosure. As shown in Figs. 2 and 3, the user interface 50 includes a housing 30, the touch panel 54 that faces the front side as described above, and a hinge 56. The hinge 56 is provided behind the housing 30 of the user interface 50, and as shown in Fig. 1, the angle of inclination and declination (a horizontal angle with respect to the user) of the user interface 50 can be changed in a state where the touch panel 54 is provided in the image forming apparatus 10.

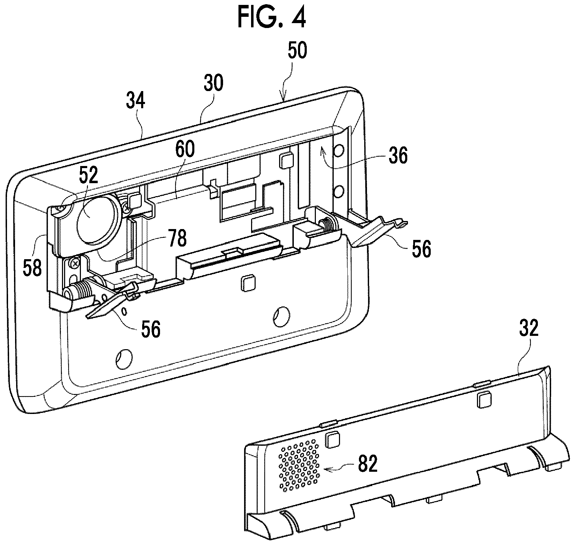

In addition, as shown in Fig. 3, the housing 30 of the user interface 50 according to the present exemplary embodiment includes a first cover 32 and a second cover 34. In other words, in the case of the user interface 50 according to the present exemplary embodiment, the first cover 32 and the second cover 34 constitute the housing 30 in a state of being combined with each other. As shown in Fig. 4, an opening portion 36 to which the first cover 32 is attachably and detachably attached is formed in the second cover 34 and the first cover 32 is attached to the opening portion 36. Note that in the present exemplary embodiment, the first cover 32 and the second cover 34 constituting the housing 30 may be formed of any material as long as the material is a material that is not easily deformed and are formed of rigid artificial resin, for example.

In addition, as shown in Fig. 3, the first cover 32 includes a mesh portion 82 through which a sound wave emitted from a speaker body 52, which will be described later, passes and exits the housing 30. That is, the mesh portion 82 faces a side opposite to a side that the touch panel 54 faces.

### (Internal Structure and the Like)

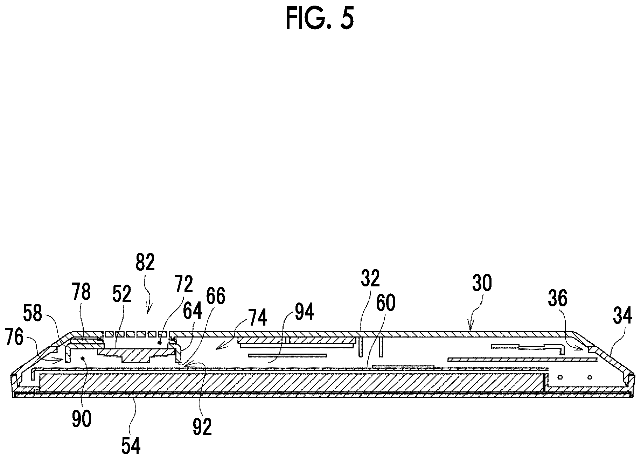

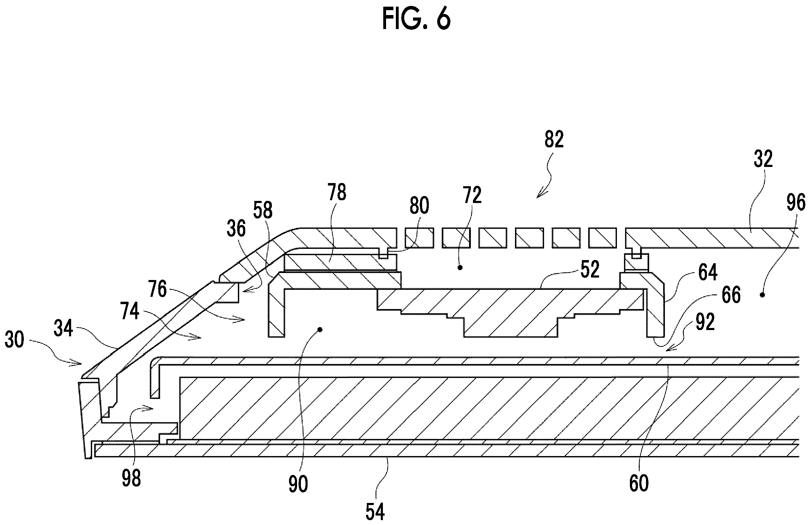

Fig. 5 is a cross-sectional view taken along the line 3A-3A in Fig. 3, and Fig. 6 is an enlarged view of the vicinity of the speaker body 52 in Fig. 5. As shown in Fig. 5, in an assembled state, the user interface 50 includes the housing 30, the speaker body 52, and a compartmentalization structure 76 that separates a first space 72 and a second space 74 from each other. In addition, as shown in Fig. 5, in the user interface 50 according to the present exemplary embodiment, the touch panel 54 is also accommodated in the housing 30.

Note that in the following description, a side (an upper side in the drawing of Fig. 5) with respect to the mesh portion 82, to which the speaker body 52 mostly emits a sound will be referred to as a "front surface side" and a side opposite thereto will be referred to as a "rear surface side". In addition, a direction toward the front surface side and the rear surface side will be referred to as a "thickness direction".

As shown in Figs. 4 to 6 and the like described above, regarding the user interface 50 according to the present exemplary embodiment, the first cover 32 covers the speaker body 52 in a state where the first cover 32 is attached to the opening portion 36 of the second cover 34. In addition, as shown in Fig. 4, regarding the user interface 50 according to the present exemplary embodiment, the entire front surface side of the speaker body 52 is exposed in a state where the first cover 32 is detached from the second cover 34.

In addition, as shown in Figs. 5 to 7, a frame-shaped rib 80 that protrudes toward the rear surface side is formed on a rear surface side (a side facing the speaker body 52) of the first cover 32 such that the rib 80 surrounds the mesh portion 82.

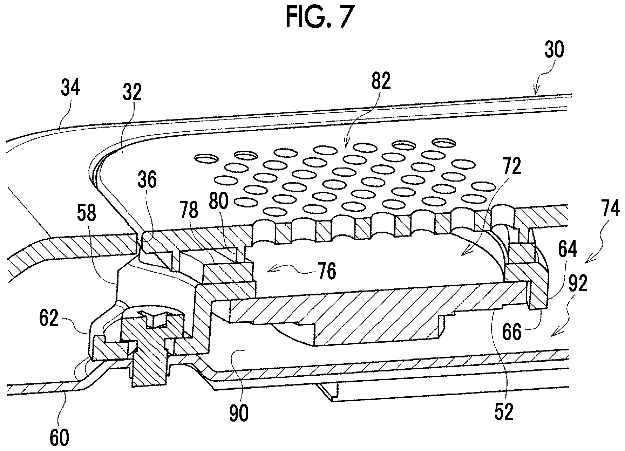

As shown in Figs. 5 and 6, the second cover 34 includes a partition wall 60 that extends to separate the front surface side and the rear surface side from each other. In addition, as shown in Fig. 7, a support member 58 to which the speaker body 52 is bonded and which will be described later is attached to the partition wall 60.

### (Speaker Body 52)

The speaker body 52 in the present exemplary embodiment is a so-called loudness speaker and generates a sound with a vibrator vibrating based on an electric signal transmitted through a signal line (not shown). In the present exemplary embodiment, a vibration plate of the speaker body 52 is disposed to face an upper side in the drawing of Fig. 5, and the speaker body 52 emits a sound toward the front surface side. Note that the length, in the thickness direction, of the speaker body 52 in the present exemplary embodiment is small with respect to, for example, the diameter thereof although the length of the speaker body 52 in the thickness direction is set and selected as appropriate based on the shape or the like of a constituent member or the like to be attached.

As shown in Figs. 4 to 7, the support member 58 is a member for attachment of the speaker body 52 to the partition wall 60 of the second cover 34, and as shown in Figs. 5 and 6, the support member 58 is a member that surrounds the speaker body 52 and supports the speaker body 52 to be separated from the partition wall 60. More specifically, the support member 58 includes a bonded portion 62 that is attached to the partition wall 60 and a surrounding portion 64 that surrounds the speaker body 52, and the speaker body 52 is disposed inside the surrounding portion 64. Therefore, a gap, which is a rear-side space 90 in the present exemplary embodiment, is formed between the partition wall 60 and a rear surface side of the speaker body 52 that is attached to the partition wall 60 via the support member 58 (in other words, the speaker body 52 that is attached to the partition wall 60 in a state of being supported by the support member 58).

In addition, as shown in Fig. 7, a notch 66 is cut at a portion of the surrounding portion 64 in a circumferential direction (a direction orthogonal to the thickness direction). In other words, through the notch 66 of the surrounding portion 64, the rear-side space 90 and an accommodation space 94 which will be described later are connected to each other.

### (Buffer Material 78)

In addition, as shown in Figs. 5 to 7, the support member 58 is provided with a buffer material 78 that is provided on the front surface side with respect to the speaker body 52 to surround the speaker body 52. The buffer material 78 is formed of an elastic member such as EPDM rubber, for example. In addition, as shown in Figs. 5 to 7, the buffer material 78 is in contact with a protruding end of the rib 80 of the first cover 32 in a state where the first cover 32 is attached to the second cover 34.

Note that although a method of bonding the support member 58 and the speaker body 52 to each other may be any method, the support member 58 and the speaker body 52 are bonded to each other by means of an adhesive (not shown), for example. In addition, although a method of bonding the support member 58 and the buffer material 78 to each other may be any method, the support member 58 and the buffer material 78 are bonded to each other by means of an adhesive (not shown), for example. In addition, although a method of bonding the support member 58 and the partition wall 60 to each other may be any method, as shown in Fig. 7, the support member 58 and the partition wall 60 are attached to each other through a method such as screwing in which the support member 58 and the partition wall 60 are attachable and detachable to and from each other. Note that in the present exemplary embodiment, the support member 58 and the speaker body 52 are held in a configuration including the second cover 34 in a state where the first cover 32 is detached from the opening portion 36 of the second cover 34 as shown in Fig. 4. In the present exemplary embodiment, the expression "to be held on a second cover side" means that the support member 58 and the speaker body 52 are held in the configuration including the second cover 34 in a state where the first cover 32 is detached from the opening portion 36 of the second cover 34 as shown in Fig. 4.

### (Compartmentalization Structure 76)

In addition, as described above, the rib 80 and the buffer material 78 are brought into contact with each other in a case where the second cover 34 and the first cover 32 according to the present exemplary embodiment are combined with each other. Accordingly, a space on the front surface side of the speaker body 52 is separated from the vicinity of the speaker body 52. That is, in the present exemplary embodiment, the buffer material 78 interposed between the protruding end of the rib 80 of the first cover 32 and the speaker body 52 is an example of the compartmentalization structure 76 in the present exemplary embodiment.

More specifically, in a state where the first cover 32 and the second cover 34 are combined with each other, the first space 72, which is a space separated by the compartmentalization structure 76, is formed on the front surface side of the speaker body 52 as shown in Figs. 5 and 6. In addition, the second space 74, which is a space separated from the first space 72, is formed in a space inside the housing 30 except for the front surface side of the speaker body 52.

In addition, as shown in Figs. 5 to 7, the second space 74 is compartmentalized into a plurality of spaces. More specifically, the second space 74 includes the rear-side space 90 which is a space behind the speaker body 52, the accommodation space 94 that accommodates a functional component different from the speaker body 52, and a connection space 92 that connects the rear-side space 90 and the accommodation space 94 to each other. In other words, the rear-side space 90 formed on the rear surface side of the speaker body 52 is connected to the vicinity of the speaker body 52 through the connection space 92.

More specifically, as shown in Fig. 7, since the notch 66 is cut at a portion of the surrounding portion 64, the rear-side space 90 and the accommodation space 94 are connected to each other. In addition, a space that is formed since the notch 66 is cut at the portion of the surrounding portion 64 and that connects the rear-side space 90 and the accommodation space 94 to each other is an example of the connection space 92 in the present exemplary embodiment.

In addition, in the present exemplary embodiment, the accommodation space 94 is compartmentalized into a plurality of sections. More specifically, the accommodation space 94 includes a first accommodation space 96 and a second accommodation space 98 that is formed on the rear surface side with respect to the first accommodation space 96 with the partition wall 60 interposed therebetween. As shown in Figs. 5 and 6, the first accommodation space 96 is a space in which a wiring line (not shown) through which an electric signal is transmitted to the speaker body 52 and a control unit that controls the touch panel 54 and the speaker body 52 are disposed. Note that the touch panel 54 is an example of the functional component different from the speaker body 52 in the present exemplary embodiment.

In addition, as shown in Figs. 5 and 6, the second accommodation space 98 is disposed in a state where a display surface (a screen on which an input operation is performed by the user) of the touch panel 54 is exposed on the rear surface side of the housing 30. Therefore, in the present exemplary embodiment, it can be said that the first space 72 is on a side opposite to the touch panel 54 with respect to the second space 74.

### (Sound That Is Heard by User)

Meanwhile, generally, in a case where the speaker body 52 is small, the lower-pitched a sound emitted by the speaker body 52 is (the relatively lower a frequency of the sound is), the more difficult it is to emit the sound and the lower-pitched a sound emitted from a speaker is, the more difficult for a user to hear the sound.

In addition, in a case where the speaker body 52 vibrates and emits a sound wave toward the front surface side, a sound wave of which the phase is opposite to the phase of the sound wave emitted to the front surface side is generated on the rear surface side of the speaker body 52. In a case where both the sound wave emitted to the rear surface side and the sound wave emitted to the front surface side reach the user, the sound waves are likely to interfere with each other and be canceled out for the user. In other words, in a case where both the sound wave emitted to the front surface side of the speaker body 52 and the sound wave emitted to the rear surface side of the speaker body 52 reach the user, it is more difficult for the user to hear a low-frequency sound that is a part of a sound emitted from the speaker body 52.

Here, in the case of the configuration of the user interface 50 according to the present exemplary embodiment, the first space 72 formed on the front surface side of the speaker body 52 and the second space 74 formed on the rear surface side of the speaker body 52 are separated from each other and thus the volume of the second space 74 is large. In other words, in the case of the configuration of the user interface 50 according to the present exemplary embodiment, it is possible to separate the sound wave emitted to the second space 74 from the mesh portion 82 and thus it is easy to suppress interference between a sound wave emitted to the first space 72 and a sound wave emitted to the second space 74.

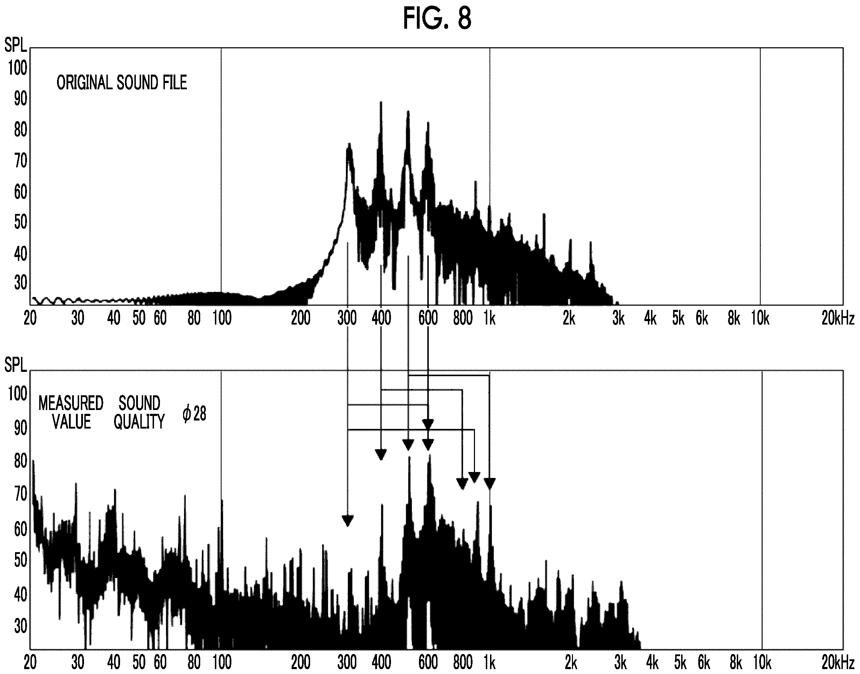

In addition, here, the present inventors created the same configuration as the configuration of the user interface 50 according to the present exemplary embodiment and caused the speaker body 52 to emit a sound, and the result of measurement performed with respect to the sound emitted from the speaker body 52 is shown in Fig. 8. An upper diagram of Fig. 8 is a spectrum diagram representing a sound included in data of a voice emitted by the speaker body 52, and a lower diagram of Fig. 8 is a spectrum diagram representing the result of measurement performed with respect to a sound emitted from the speaker body 52.

As described above, an example shown in Fig. 8 also indicates that the sound included in the data of the voice, which is shown in the upper diagram, as shown in the lower diagram, does not exactly appear and sound pressure level peaks at frequencies close to 300 Hz and 400 Hz are smaller in the lower diagram than in the upper diagram.

However, as shown in the lower diagram of Fig. 8, it is obvious that the sound pressure levels of a sound emitted from the speaker at a frequency of 600 Hz which is two times 300 Hz, and a frequency of 900 Hz which is three times 300 Hz are increased. In addition, it is obvious that the sound pressure level at 800 Hz, which is a frequency that is two times 400 Hz, is increased. In addition, it is obvious that the sound pressure level at 1000 Hz (1 kHz), which is a frequency that is two times 500 Hz, is increased. In other words, in the case of the configuration and the structure of the user interface 50 according to the present exemplary embodiment, even in the case of a frequency in a low-frequency range (in the present example, equal to or lower than 500 Hz) out of frequencies included in voice data, a sound at a frequency that is two times or three times the frequency in the low-frequency range is easily measured.

In addition, a missing fundamental phenomenon is known in which a person perceives a sound of one frequency in a case where a sound related to a frequency that is an integer multiple of the one frequency is clearly heard even in a case where the sound pressure level of a sound related to the one frequency is unclear. Therefore, as shown in the lower diagram of Fig. 8, in the case of the user interface 50 according to the present exemplary embodiment, sounds of 300 Hz and 400 Hz are easily recognized due to the above-described phenomenon even in a case where it is actually difficult for the user to hear sounds of 300 Hz and 400 Hz.

In the case of the user interface 50 and the image forming apparatus 10 according to the present exemplary embodiment, the following actions and effects can be achieved.

### (Action and Effect)

In the user interface 50 according to the present exemplary embodiment, the first space 72 on the front surface side of the speaker body 52 and the second space 74 on the rear surface side are separated from each other in a state where the first cover 32 is attached to the second cover 34. Accordingly, a sound wave that is emitted from the speaker body 52 to the first space 72 and a sound wave that is emitted to the second space 74 and of which the phase is opposite to the phase of the sound wave are unlikely to be mixed with each other. Therefore, in the case of the user interface 50 according to the present exemplary embodiment, it is easy to hear a low-pitched sound in comparison with a configuration in which a space on the front surface side of the speaker body 52 and a space on the rear surface side are connected to each other in the user interface 50 in which the speaker body 52 is present between the first cover 32 and the second cover 34 to and from which the first cover 32 is attachable and detachable.

In addition, in the user interface 50 according to the present exemplary embodiment, the compartmentalization structure 76 is composed of the frame-shaped rib 80 and the buffer material 78 interposed between the speaker and the rib 80. Therefore, in the case of the user interface 50 according to the present exemplary embodiment, a gap is less likely to be formed between the first space 72 and the second space 74 in comparison with a configuration in which the compartmentalization structure 76 is composed of only the rib 80 protruding from the first cover 32.

In addition, in the user interface 50 according to the present exemplary embodiment, the entire front surface side of the speaker body 52 is exposed in a state where the first cover 32 is detached from the second cover 34. In other words, in the case of the user interface 50 according to the present exemplary embodiment, a speaker can be assembled with the first cover 32 being detached. Therefore, in the case of the user interface 50 according to the present exemplary embodiment, it is easy to perform an operation of assembling the speaker body 52 in comparison with a configuration in which only a portion of the front surface side of the first cover 32 is exposed in a state where the first cover 32 is detached from the second cover 34.

In addition, the user interface 50 according to the present exemplary embodiment includes the accommodation space 94 that accommodates a functional component different from the speaker body 52 and the second space 74 is connected to the rear-side space 90 and the accommodation space 94. In other words, in the case of the user interface 50 according to the present exemplary embodiment, the second space 74 extends outward from a side behind the speaker body 52. Therefore, in the case of the user interface 50 according to the present exemplary embodiment, it is easier to hear a low-pitched sound in comparison with a case where the second space 74 is provided only on the rear surface side of the speaker body 52.

In addition, in the user interface 50 according to the present exemplary embodiment, the notch 66 is cut at a portion of the surrounding portion 64 that surrounds the speaker body 52 and the connection space 92 that connects the rear-side space 90 and the accommodation space 94 to each other is formed by the notch 66. Therefore, in the case of the user interface 50 according to the present exemplary embodiment, the connection space 92 can be formed by the support member 58.

In addition, in the user interface 50 according to the present exemplary embodiment, the speaker body 52 is attachably and detachably attached, integrally with the support member 58, to the second cover 34 side. Therefore, in the case of the user interface 50 according to the present exemplary embodiment, it is possible to integrally replace the speaker body 52 and the support member 58 by detaching the first cover 32.

In addition, in the user interface 50 according to the present exemplary embodiment, the touch panel 54 on which an input operation is performed by the user is disposed in the second space 74. Therefore, in the case of the user interface 50 according to the present exemplary embodiment, a device can be provided for the input operation performed by the user.

In addition, the first space 72 of the user interface 50 according to the present exemplary embodiment is on a side opposite to the touch panel 54 with respect to the second space 74. Therefore, in the case of the user interface 50 according to the present exemplary embodiment, the size of the user interface 50 is reduced in comparison with a configuration in which the speaker body 52 is disposed in parallel with the touch panel 54 along a cover surface (a surface in a direction in which the first cover 32 extends). In addition, in the case of the user interface 50 according to the present exemplary embodiment, since the mesh portion 82 is on a side opposite to a front side of the image forming apparatus 10 on which the user operates the image forming apparatus 10, dirt is less likely to enter the housing 30 even in a case where the user operates the image forming apparatus 10 with a wet hand or the like.

In addition, in the image forming apparatus 10 according to the present exemplary embodiment, the user interface 50 having the above-described configuration is used. Therefore, in the case of the user interface 50 according to the present exemplary embodiment, a sound emission function can be achieved without the speaker body 52 disposed in the body of the image forming apparatus 10.

### (Modification Examples)

Note that in the above description, the user interface 50 of the image forming apparatus 10 is a device including the compartmentalization structure 76 according to the present exemplary embodiment. However, examples of a device according to the present exemplary embodiment are not limited thereto. For example, a configuration in which the apparatus housing 12 of the image forming apparatus 10 functions as the first cover 32 and the second cover 34 and the apparatus housing 12 of the image forming apparatus 10 includes the speaker body 52 and the compartmentalization structure 76 may also be adopted. That is, the image forming apparatus 10 may be another example of the "device" according to the present exemplary embodiment. In addition, in such a case, a configuration in which an accommodation space that accommodates some functional components including the image forming unit 14, the document reading unit 18, or the like of the image forming apparatus 10 and a rear-side space on the rear surface side of the speaker body 52 are connected to each other through a connection space may also be adopted.

In addition, in the above description, the user interface 50 including the touch panel 54 has been described as an example of the device according to the present exemplary embodiment. However, examples of the device according to the present exemplary embodiment are not limited thereto. For example, the device may be a device that does not include an input unit such as the touch panel 54 and that has a configuration as described above formed by a housing including a first cover and a second cover, a speaker body, and a compartmentalization structure. In other words, the device according to the present exemplary embodiment is not limited to an input device or the image forming apparatus 10.

In addition, in the example described above, the user interface 50 includes the touch panel 54 provided in the second accommodation space 98. However, the configuration of the user interface 50 according to the present exemplary embodiment is not limited thereto. For example, a display that only presents information to the user or other functional components such as a keyboard may also be disposed in addition to the touch panel 54.

In addition, in the above description, the first space 72 is on a side opposite to the touch panel 54 with respect to the second space 74. However, the configuration of the user interface 50 according to the present exemplary embodiment is not limited thereto. For example, a configuration in which the first cover 32 is provided on the front surface side in the image forming apparatus 10 and the mesh portion 82 is positioned on the front surface side may also be adopted.

In addition, in the above description, the speaker body 52 is integrated with the support member 58 and is attached to the second cover 34 side. However, the configuration of the user interface 50 according to the present exemplary embodiment is not limited thereto. For example, the support member 58 may be attached to the partition wall 60 such that the support member 58 is not attachable and detachable with respect to the partition wall 60, or the speaker body 52 and the support member 58 may be attachably and detachably attached.

In addition, in the above description, the notch 66 is cut at a portion of the surrounding portion 64 of the support member 58 and the notch 66 forms the connection space 92. However, the configuration of the user interface 50 according to the present exemplary embodiment is not limited thereto. For example, the surrounding portion 64 may not be provided with the notch 66 and the connection space 92 that connects the rear-side space 90 and the accommodation space 94 to each other may be formed by a hole formed in the partition wall 60.

In addition, in the above description, the connection space 92 that connects the rear-side space 90 and the accommodation space 94 to each other is formed by the support member 58 in the user interface 50. However, the configuration of the user interface 50 according to the present exemplary embodiment is not limited thereto. For example, a configuration in which the surrounding portion 64 of the support member 58 covers the rear surface side of the speaker body 52 while being in contact with the partition wall 60 and the connection space 92 is not provided may also be adopted.

In addition, in the above description, the entire front surface side of the speaker body 52 is exposed in a state where the first cover 32 is detached. However, the configuration of the user interface 50 according to the present exemplary embodiment is not limited thereto. For example, a configuration in which the speaker body 52 is not exposed even in a state where the first cover 32 is detached and the speaker body 52 is more firmly attached to the second cover 34 side may also be adopted.

In addition, in the above description, the compartmentalization structure 76 is composed of the rib 80 protruding from the first cover 32 and the buffer material 78 interposed between the rib 80 and the speaker body 52. However, the configuration of the user interface 50 according to the present exemplary embodiment is not limited thereto. For example, the compartmentalization structure 76 may be configured with the first cover 32 not including the rib 80 and the buffer material 78 being pressed by a flat surface of the first cover 32. In addition, for example, the buffer material 78 may not be provided and the compartmentalization structure 76 may be configured with the rib 80 being in direct contact with the support member 58.

Even in the cases of these modification examples, the same actions and effects as described above can be achieved.

Although the exemplary embodiments of the present disclosure have been described above with reference to the accompanying drawings, it is clear that anyone with ordinary knowledge in the field of the art to which the present disclosure belongs can come up with various modifications or applications within the scope of the technical ideas described in the claims, and it is understood that these also naturally belong to the technical scope of the present disclosure.

The aspects of the present disclosure will be further described below.
(((1))) A device comprising:
   a housing that includes a first cover and a second cover in which an opening portion to which the first cover is attachably and detachably attached is formed;
   a speaker body that is held on a second cover side inside the housing; and
   a compartmentalization structure that separates a first space on a front surface side of the speaker body and a second space on a rear surface side of the speaker body from each other in a state where the first cover is attached to the second cover.
(((2))) The device according to (((1))),
   wherein the compartmentalization structure includes a frame-shaped rib protruding from the first cover and a buffer material interposed between a protruding end of the rib and the speaker body.
(((3))) The device according to (((2))),
   wherein an entire front surface side of the speaker body is exposed in a state where the first cover is detached from the second cover.
(((4))) The device according to any one of (((1))) to (((3))),
   wherein the housing includes an accommodation space that accommodates a functional component different from the speaker body, and
   the second space includes a rear-side space on the rear surface side of the speaker body, the accommodation space, and a connection space that connects the rear-side space and the accommodation space to each other.
(((5))) The device according to (((4))), further comprising:
   a support member that includes a surrounding portion and that supports the speaker body to the second cover side, the surrounding portion surrounding the speaker body and separating the rear-side space and the accommodation space from each other,
   wherein a portion of the surrounding portion in a circumferential direction is cut out so that the connection space is formed.
(((6))) The device according to (((5))) citing (((3))),
   wherein the speaker body is attachably and detachably attached, integrally with the support member, to the second cover side.
(((7))) An input device comprising:
   an input unit that is disposed in the second space and on which an input operation is performed by a user operating the device according to any one of (((1))) to (((6))).
(((8))) The input device according to (((7))),
   wherein the first space is on a side opposite to the input unit with respect to the second space.
(((9))) An image forming apparatus comprising:
   the input device according to (((7))) or (((8))) as a user interface.

In the case of the device of (((1))), it is easy to hear a low-pitched sound in comparison with a configuration in which a space on a front surface side of a speaker body and a space on a rear surface side of the speaker body are connected to each other in a device in which the speaker body is present between a first cover and a second cover, to and from which the first cover is attachable and detachable.

In the case of the device of (((2))), a gap is less likely to be formed between the first space and the second space in comparison with a configuration in which the compartmentalization structure is composed of only the rib protruding from the first cover.

In the case of the device of (((3))), it is easy to perform an operation of assembling the speaker body in comparison with a configuration in which only a portion of the front surface side of the first cover is exposed in a state where the first cover is detached from the second cover.

In the case of the device of (((4))), it is easier to hear a low-pitched sound in comparison with a case where the second space is provided only on the rear surface side of the speaker body.

In the case of the device of (((5))), the connection space can be formed by the support member without processing the second cover.

In the case of the device of (((6))), it is possible to integrally replace the speaker body and the support member by detaching the first cover.

In the case of the input device of (((7))), the device can be provided for the input operation performed by the user.

In the case of the input device of (((8))), the size of the input device is reduced in comparison with a configuration in which the speaker body is disposed in parallel with the input unit along a cover surface.

In the case of the image forming apparatus of (((9))), a sound emission function can be achieved without the speaker body disposed in a body of the image forming apparatus.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

10: image forming apparatus (image forming apparatus and another example of apparatus)
12: apparatus housing
14: image forming unit
16: paper discharge unit
18: document reading unit
30: housing
32: first cover
34: second cover
36: opening portion
50: user interface (example of input device and another example of device)
52: speaker body
54: touch panel (example of input unit and example of functional component different from speaker body)
56: hinge
58: support member
60: partition wall
62: bonded portion
64: surrounding portion
66: notch
72: first space
74: second space
76: compartmentalization structure
78: buffer material
80: rib
82: mesh portion
90: rear-side space
92: connection space
94: accommodation space
96: first accommodation space
98: second accommodation space

## Claims

1. A device comprising:
a housing that includes a first cover and a second cover in which an opening portion to which the first cover is attachably and detachably attached is formed;
a speaker body that is held on a second cover side inside the housing; and
a compartmentalization structure that separates a first space on a front surface side of the speaker body and a second space on a rear surface side of the speaker body from each other in a state where the first cover is attached to the second cover.

2. The device according to claim 1,
wherein the compartmentalization structure includes a frame-shaped rib protruding from the first cover and a buffer material interposed between a protruding end of the rib and the speaker body.

3. The device according to claim 2,
wherein an entire front surface side of the speaker body is exposed in a state where the first cover is detached from the second cover.

4. The device according to any one of claims 1 to 3,
wherein the housing includes an accommodation space that accommodates a functional component different from the speaker body, and
the second space includes a rear-side space on the rear surface side of the speaker body, the accommodation space, and a connection space that connects the rear-side space and the accommodation space to each other.

5. The device according to claim 4, further comprising:
a support member that includes a surrounding portion and that supports the speaker body to the second cover side, the surrounding portion surrounding the speaker body and separating the rear-side space and the accommodation space from each other,
wherein a portion of the surrounding portion in a circumferential direction is cut out so that the connection space is formed.

6. The device according to claim 5 citing claim 3,
wherein the speaker body is attachably and detachably attached, integrally with the support member, to the second cover side.

7. An input device comprising:
an input unit that is disposed in the second space and on which an input operation is performed by a user operating the device according to any one of claims 1 to 6.

8. The input device according to claim 7,
wherein the first space is on a side opposite to the input unit with respect to the second space.

9. An image forming apparatus comprising:
the input device according to claim 7 or 8 as a user interface.
